(19) Europäisches Patentamt
European Patent Office
Office européen des brevets

(11) **EP 2 407 798 A1**

(12) **EUROPEAN PATENT APPLICATION**

(43) Date of publication:
**18.01.2012 Bulletin 2012/03**

(51) Int Cl.:
*G01S 7/35* (2006.01)          *G01S 13/58* (2006.01)
*G01S 13/66* (2006.01)

(21) Application number: **10250713.4**

(22) Date of filing: **01.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Projectile detection system**

(57)    A projectile detection system, and method of detecting a projectile (for example a bullet), for use on a vehicle (100) (for example a helicopter), the projectile detection system comprising: a radar antenna array (4) arranged to transmit and receive microwave signals so as to provide a plurality of detection segments (40, 42, 44, 46) of a volume of airspace (38); one or more processors (3) arranged to: determine which segments (40, 42, 44, 46) microwave signals reflected by a projectile (10) are received from; determine timing information relating to a time order in which the received microwave signals are received; and determine directional information relating to a direction of travel of the projectile (10) using the determined segments (40, 42, 44, 46) and the determined timing information; wherein the microwave signals have a frequency between 1 GHz and 30GHz.

**FIG. 1**

**Description**

FIELD OF THE INVENTION

The present invention relates to projectile detection systems for use on vehicles.

BACKGROUND

Helicopters can come under enemy fire in conflict situations. This enemy fire may include small arms fire and heavy machine gun fire.

If a helicopter pilot was aware that the helicopter was under enemy fire, evasive action could be taken. This may break the lock the enemy has on the helicopter, which would minimise damage to the aircraft structure and safeguard personnel.

Thus it is desirable to detect incoming enemy fire, from small arms fire up to heavy machine gun fire. It would also be desirable to determine the direction of the incoming enemy fire. For example, information related to the direction of incoming enemy fire could be used to prevent the helicopter turning into the enemy fire, or to identify the location of the enemy e.g. by incorporating it with information about the local terrain.

SUMMARY OF THE INVENTION

In a first aspect the present invention provides a projectile detection system for use on a vehicle, the projectile detection system comprising a radar antenna array arranged to transmit and receive microwave signals so as to provide a plurality of detection segments of a volume of airspace, one or more processors arranged to determine which segments of the plurality of segments received microwave signals reflected by the projectile are received from, determine timing information relating to a time order in which the received microwave signals are received, and determine directional information relating to a direction of travel of the projectile using the determined segments in which the received microwave signals reflected by the projectile are received from and the determined timing information, wherein the microwave signals have a frequency between 1 GHz and 30GHz.

The microwave signals may have a frequency between 7GHz and 17GHz.

The microwave signals may have a frequency between 10GHz and 14GHz.

The radar antenna array may comprise a plurality of transmitters, each transmitter in the plurality being arranged to transmit microwave signals into a respective segment of the plurality of segments, a plurality of receivers, each receiver in the plurality being arranged to receive microwave signals reflected by the projectile from a respective segment of the plurality of segments, and shielding means arranged to prevent microwave signals transmitted from a transmitters being directly received by a receiver without first being reflected by an object.

The microwave signals may have a continuous waveform.

The volume of airspace may be a volume of airspace substantially surrounding a portion of the vehicle.

At least two of the segments may overlap to some extent.

The projectile detection system may further comprise means for determining a radial velocity of the projectile.

The means for determining a radial velocity of the projectile may be adapted to determine a radial velocity of the projectile using a Doppler profile of the received microwave signals.

In a further aspect, the present invention provides a vehicle comprising a projectile detection system according to the above aspect.

The vehicle may be an aircraft.

In a further aspect, the present invention provides a method of detecting a projectile comprising transmitting microwave signals so as to provide a plurality of detection segments of a volume of airspace, receiving microwave signals reflected by the projectile, determining which segments of the plurality of segments received microwave signals reflected by the projectile are received from, determining timing information relating to a time order in which the received microwave signals are received, and determining directional information relating to a direction of travel of the projectile using the determined segments in which the received microwave signals reflected by the projectile are received from and the determined timing information, wherein the microwave signals each have a frequency between 1 GHz and 30GHz.

The microwave signals may each have a frequency between 7GHz and 17GHz.

The microwave signals may each have a frequency between 10GHz and 14GHz.

The projectile may be a bullet.

BRIEF DESCRIPTION OF THE DRAWINGS

Figure 1 is a schematic illustration of a bullet detection system connected to a helicopter;

Figure 2 schematically shows the effect of a bullet travelling through a region of airspace into which a radar antenna array transmits microwaves;

Figure 3 is a schematic illustration of certain details of a radar antenna array;

Figure 4 is a schematic illustration of an airspace volume surrounding a radar antenna array into which, and from which, the radar antenna array transmits and receives microwave signals respectively;

Figure 5 is a process flow chart showing certain steps of an embodiment of a bullet detection process;

Figure 6 is a schematic illustration of a two-dimensional top-down view of an airspace volume surrounding the radar antenna array; and

Figure 7 is a schematic illustration of a two-dimensional top-down view of an airspace volume surrounding the radar antenna array.

DETAILED DESCRIPTION

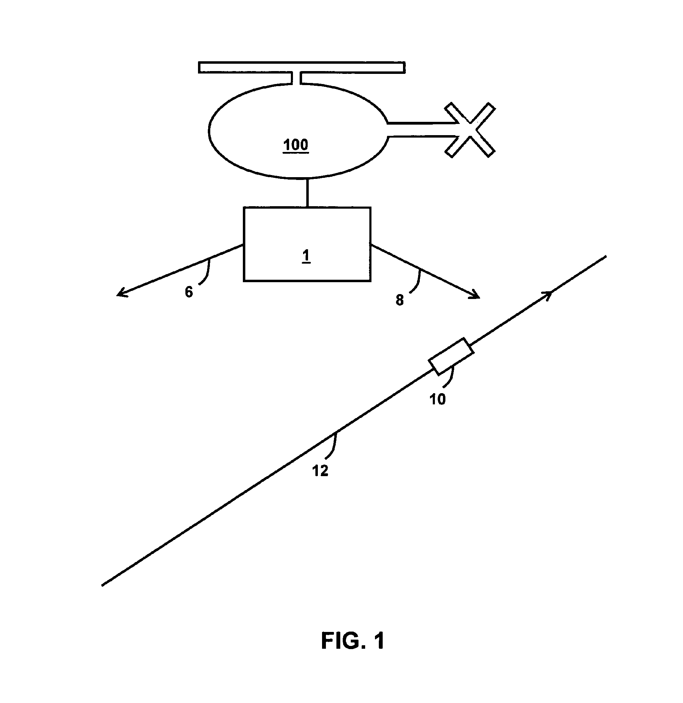

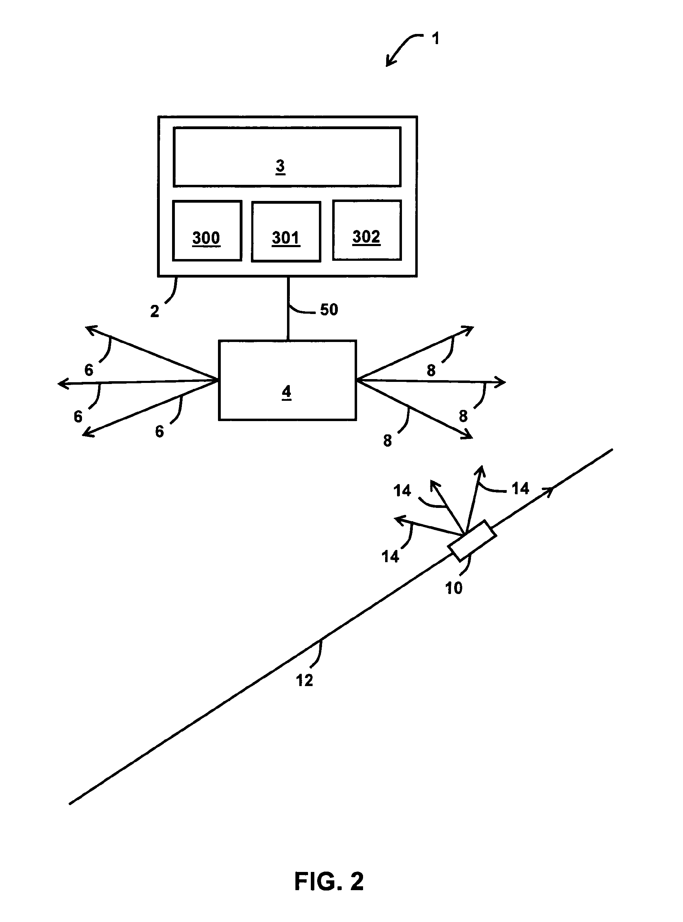

Figure 1 is a schematic illustration of a bullet detection system 1 connected to a helicopter 100. The bullet detection system 1 emits microwaves 6, 8 to detect bullets in the vicinity of the bullet detection system. For clarity, the detection of single bullet, hereinafter referred to as "the bullet 10", by this example of an embodiment of the bullet detection system 1, is considered. The path of the bullet 10, hereinafter referred to as "the bullet path 12" is schematically depicted in Figure 2 as an arrow.
There are a number of bullet calibres that may be used against the helicopter 100. Typical calibres are:

i) 5.45mm x 39mm. Muzzle velocity 840m/s.

ii) 5.56mm x 45mm. Muzzle velocity 940m/s.

iii) 7.62mm x 51 mm. Muzzle velocity 823m/s

iv) 7.62mm x 39mm. Muzzle velocity 715m/s.

v) 9mm x 19mm. Muzzle velocity 360m/s.

vi) 12.7mm x 99mm. Muzzle velocity 928m/s.

vii) 12.7mm x 108mm. Muzzle velocity 817m/s.

Figure 2 is a schematic illustration of an embodiment of a bullet detection system 1 for detecting bullets in the vicinity of the bullet detection system 1. The bullet 10 and the bullet path of Figure 1 are also shown in Figure 2.
The bullet detection system 1 comprises a controller 2 and a radar antenna array 4. The controller 2 is connected to the radar antenna array 4 via a connection 50.
The controller comprises a processor 3, a clock 300, a transmitter 301 and a receiver 302.
In operation, the transmitter 301 transmits a signal, hereinafter referred to as the "broadcast signal" to the radar antenna array 4. The broadcast signal is transmitted to the radar antenna array 4 via the connection 50.
The radar antenna array 4 receives the broadcast signal from the transmitter 301. In this embodiment, the radar antenna array 4 transmits four discrete microwave signals that depend on the broadcast signal. Each of the four microwave signals are directed from the radar antenna array 4 into a respective distinct region of airspace. In Figure 2, for clarity, only two of these microwave signals are schematically depicted. A first microwave signal 6, schematically represented by a first set of arrows labelled by the reference numerals 6, is directed into a region of airspace. A second microwave signal 8, schematically represented by a second set of arrows labelled by the reference numerals 8, is directed into a further region of airspace, distinct from the region of airspace in to which the first microwave signal 6 is directed.
In this embodiment, the radar antenna array 4 has the following parameters:

| | |
|---|---|
| Transmit Power: | 1mW (0dBm) |
| RF Frequency: | 12GHz |
| Analogue to Digital Converter (ADC): | 4 off, 1 MHz, 3MHz, or 10MHz |
| Bandwidth: | ±31.25kHz for a 1 MHz ADC; same footprint for the 3MHz and 10 MHz ADCs |
| Noise Figure: | 3dB |
| Waveform: | continuous waveform (CW) |

Figure 2 schematically shows the effect of a bullet travelling through a region of airspace into which the radar antenna array transmits microwaves 6, 8. In particular, the transmitted microwaves 6, 8 are reflected by the bullet 10 under consideration in this example. The reflected microwaves 14 are shown schematically in Figure 2 as a set of arrows 14 originating from the bullet 10. The reflected microwaves constitute a microwave signal. Part of this reflected microwave signal is directed back to the radar antenna array 4. This signal is received by the radar antenna array 4. The received signal is forwarded from the radar antenna array 4 to the receiver 302 via the connection 50. The forwarded signal is hereinafter referred to as the "detected signal".

In operation, the detected signal is received by the receiver 302. The detected signal corresponds to the microwave signal received by the radar antenna array 4.

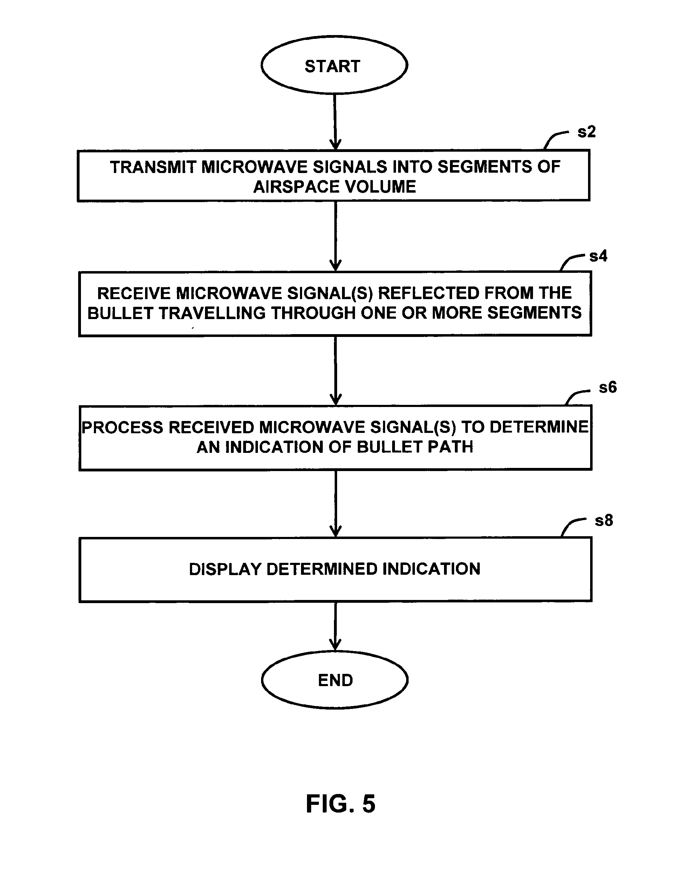

In this embodiment, the processor 3 processes the detected signal received by the receiver 302. This processing of the detected signal performed by the processor 3 will be described in more detail later below with reference to Figure 5.

In this embodiment, the clock 300 is used by the processor 3 in the processing of the second signal, as described later below with reference to Figure 5. A clock value read from the clock 300 or other clock output is used by the processor 3 to control and compare signals transmitted by the transmitter 301 (the broadcast signal) and received by the receiver 302 (the detected signal).

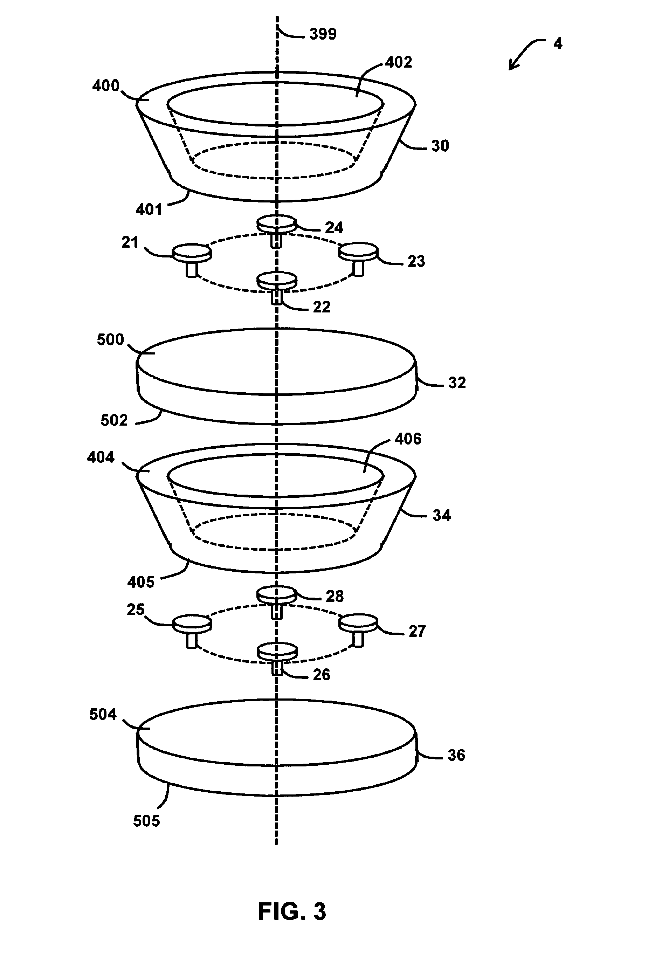

Figure 3 is a schematic illustration of certain details of the radar antenna array 4 of this embodiment. For the purposes of clarity and ease of understanding, Figure 3 shows elements of the radar antenna array 4 in an "exploded" view.

The radar antenna array 4 comprises a first beam-shaping dish 30, a first transmission antenna 21, a second transmission antenna 22, a third transmission antenna 23, a fourth transmission antenna 24, a first beam-blocking plate 32, a second beam-shaping dish 34, a first reception antenna 25, a second reception antenna 26, a third reception antenna 27, an fourth reception antenna 28, and a second beam-blocking plate 36.

In this embodiment the first beam-shaping dish 30, the first beam-blocking plate 32, the second beam-shaping dish 34, and the second beam-blocking plate 36 have a common central axis 399 represented schematically in Figure 3 by a dotted line.

In this embodiment, the first beam-shaping dish 30 has the shape of a circular frustum having two floors, hereinafter referred to as the "first floor 400" and the "second floor 401 ". The first floor 400 is opposite the second floor 401. The first floor 400 has a larger diameter than the second floor 401. The first beam-shaping dish 30 has a cavity, hereinafter referred to as the "first cavity 402", located in the first floor 400. The first cavity 402 has the shape of a circular frustum having a geometrically similar shape, a smaller size, a same orientation, and a common central axis 399 to the circular frustum shape of the first beam-shaping dish 30. In this embodiment the diameter of the first floor 400 is 0.15m. The largest diameter of the first cavity 402 in the first floor 400 is 0.12m. In this embodiment the diameter of the second floor 401 is 0.11 m. The thickness of the first beam-shaping dish 30, i.e. the distance between the first floor 400 and second floor 401 is 0.03m.

In this embodiment, the first beam-blocking plate 32 has cylindrical shape. The first beam-blocking plate 32 comprises two circular surfaces, hereinafter referred to as the "first circular surface 500" and the "second circular surface 502". The first circular surface 500 is opposite the second circular surface 502. In this embodiment, the first circular surface 500 has a diameter of 0.14m. In this embodiment, the second circular surface 502 has a diameter of 0.14m.

In this embodiment, the second beam-shaping dish 34 has the shape of a circular frustum having two floors, hereinafter referred to as the "third floor 404" and the "fourth floor 405". The third floor 404 is opposite the fourth floor 405. The third floor 404 has a larger diameter than the fourth floor 405. The first beam-shaping dish 30 has a cavity, hereinafter referred to as the "second cavity 406", located in the third floor 404. The second cavity 406 has the shape of a circular frustum having a geometrically similar shape, a smaller size, a same orientation, and a common central axis 399 to the circular frustum shape of the second beam-shaping dish 34. In this embodiment the diameter of the third floor 404 is 0.15m. The largest diameter of the second cavity 406 in the third floor 404 is 0.12m. In this embodiment the diameter of the fourth floor 405 is 0.11 m. The thickness of the second beam-shaping dish 34, i.e. the distance between the third floor 404 and fourth floor 405 is 0.03m.

In this embodiment, the second beam-blocking plate 36 has cylindrical shape. The second beam-blocking plate 36 comprises two circular surfaces, hereinafter referred to as the "third circular surface 504" and the "fourth circular surface 505". The third circular surface 504 is opposite the fourth circular surface 505. In this embodiment, the third circular surface 504 has a diameter of 0.14m. In this embodiment, the fourth circular surface 505 has a diameter of 0.14m.

In the following further description of the radar antenna array 4, the terminology 'below' and 'above' has been adopted. These terms are used merely to illustrate the relative positions of the certain elements of the radar antenna array 4. However, the radar antenna array 4 can be utilised in any orientation.

In this embodiment, the first beam-shaping dish 30 is positioned such that the first floor 400 is above the second floor 401. The first transmission antenna 21, the second transmission antenna 22, the third transmission antenna 23, and the fourth transmission antenna 24 are positioned between the first beam-shaping dish 30 and the first beam-blocking plate 32 such that they are below the second floor 401 and above the first circular surface 500. The first transmission antenna 21, the second transmission antenna 22, the third transmission antenna 23, and the fourth transmission antenna 24 are equally spaced on the first circular surface 500 and concentrically around the central axis 399. The beam-blocking plate 32 is positioned such that the first circular surface 500 is above the second circular surface 502. The second beam shaping dish 34 is below the first beam-blocking plate 32. The second beam-shaping dish 34 is positioned such that the third floor 404 is above the fourth floor 405. The first reception antenna 25, the second reception antenna 26, the third reception antenna 27, and the fourth reception antenna 28 are positioned between the second beam-shaping dish 34 and the second beam-blocking plate 36 such that they are below the fourth floor 405 and above the third circular surface 504. The first reception antenna 25, the second reception antenna 26, the third reception antenna 27, the fourth reception antenna 28 are equally spaced on the third circular surface 504 and concentrically around the central axis 399. The second beam-blocking plate 36 is positioned such that the third circular surface 504 is above the fourth circular surface 505.

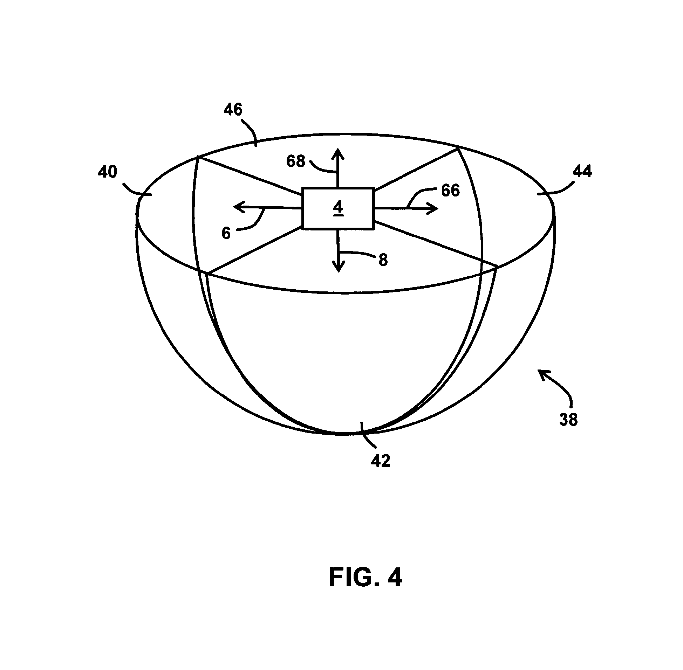

In operation, the first transmission antenna 21 transmits a first microwave signal 6. The first microwave signal depends on the broadcast signal received from the transmitter 301, as described above with reference to Figure 2. The first microwave signal 6 is shaped by the first beam-shaping dish 30 and directed in to a first region of airspace, as described in greater detail later below with reference to Figure 4.

In operation, the second transmission antenna 22 transmits a second microwave signal 8. The second microwave signal 8 depends on the broadcast signal received from the transmitter 301, as described above with reference to Figure 2. The second microwave signal 8 is shaped by the first beam-shaping dish 30 and directed in to a second region of airspace, as described in greater detail later below with reference to Figure 4.

The third transmission antenna 23 transmits a third microwave signal. The third microwave signal depends on the broadcast signal received from the transmitter 301, as described above with reference to Figure 2. The third microwave signal is shaped by the first beam-shaping dish 30 and directed in to a third region of airspace, as described in greater detail later below with reference to Figure 4.

The fourth transmission antenna 24 transmits a fourth microwave signal. The fourth microwave signal depends on the broadcast signal received from the transmitter 301, as described above with reference to Figure 2. The fourth microwave signal is shaped by the first beam-shaping dish 30 and directed in to a fourth region of airspace, as described in greater detail later below with reference to Figure 4.

The first, second, third, and fourth microwave signals are blocked by the first beam blocking plate 32. This has the effect that each of the respective microwave signals transmitted from the transmission antennas 21, 22, 23, 24 are not directly received by respective reception antennas 25, 26, 27, 28. To be received by the respective reception antennas 25, 26, 27, 28, the respective microwaves signals have to be reflected from an object in the vicinity of the radar antenna array 4. This advantageously provides that the transmission antennas 21, 22, 23, 24 tend to be able to operate concurrently with the reception antennas 25, 26, 27, 28 without the respective transmitted microwave signals directly being received by the respective reception antennas 25, 26, 27, 28 without being reflected by an object.

Consider an object travelling in the vicinity of the radar antenna array 4, for example the bullet 10 as described above with reference to Figure 2. The respective first, second, third, and/or fourth microwave signals are reflected from such an object if the object travels through the respective first, second, third, and/or fourth regions of airspace, i.e. if the object travels through the first region of airspace, part of the reflected first microwave signal 6 is received by the first reception antenna 25, if the object travels through the second region of airspace, part of the reflected second microwave signal 8 is received by the second reception antenna 26, if the object travels through the third region of airspace, part of the reflected third microwave signal is received by the third reception antenna 27, and if the object travels through the fourth region of airspace, part of the reflected fourth microwave signal is received by the fourth reception antenna 27, as described in greater detail later below with reference to Figure 4.

Figure 4 is a schematic illustration of an airspace volume 38 surrounding the radar antenna array 4 into which, and from which, the radar antenna array 4 transmits and receives microwave signals respectively. In this embodiment, the airspace volume 38 covers the maximum volume of airspace in which objects, for example the bullet 10, can be detected by the radar antenna array 4. The size of the airspace volume 38 is limited by, for example, the transmitter power, the gain of the transmitting antenna(s), the effective aperture of the receiving antenna(s), the radar cross section or scattering coefficient of the target, and/or the pattern propagation factor. For ease of explanation the boundary of the airspace volume 38 is considered a cut-off boundary for the microwave signals transmitted by the radar antenna array, i.e. the microwaves transmitted from the radar antenna array do not propagate outside the airspace volume 38. However, in practice such a discrete boundary does not exist, and instead the microwave signals will become weaker the further they travel from the radar antenna array 4.

For reasons of clarity and ease of understanding, the airspace volume 38 shown in Figure 3 is schematically depicted as a hemisphere. However, the airspace volume 38 is not necessarily hemispherical. The airspace volume 38 can be any shape determined by the antennas and the beam-shaping dishes 30, 34. In this embodiment, the shape of the airspace volume 38 is determined by the first and second beam-shaping dishes 30, 34, as described above with reference to Figure 3.

In this embodiment, the airspace volume 38 comprises a first segment 40, a second segment 42, a third segment 44, and a fourth segment 46.

In this embodiment, the first segment 40 corresponds to the respective distinct region of airspace into which the first microwave signal 6 is directed from the first transmission antenna 21 as described above with reference to Figures 1 to 3. The second segment 42 corresponds to the respective distinct region of airspace into which the second microwave signal 8 is directed from the second transmission antenna 22 as described above with reference to Figures 1 to 3. The third segment 44 corresponds to the respective distinct region of airspace into which the third microwave signal, schematically represented in Figure 4 by an arrow and hereinafter indicated by the reference numeral 66, is directed from the third transmission antenna 23 as described above with reference to Figure 3. The fourth segment 46 corresponds to the respective distinct region of airspace into which the fourth microwave signal, schematically represented in Figure 4 by an arrow and hereinafter indicated by the reference numeral 68, is directed from the fourth transmission antenna 24 as described above with reference to Figure 3.

In this embodiment, the first segment 40, the second segment 42, the third segment 44, and the fourth segment 46 are each of approximately equal size. The entirety of the airspace volume 38 is encompassed by the first, second, third and fourth segments. Each of the segments 40, 42, 44, 46 has a volume approximately equal to a quarter of the airspace volume 38.

In this embodiment, the components of the radar antenna array 4 are arranged and operated so that the respective first, second, third, and fourth microwave signals, that are directed in to the respective first, second, third, and fourth regions of airspace, do not overlap. Thus, the first, second, third and fourth segments do not overlap. This provides the following.

The second, third and fourth microwave signals are not transmitted in to the first segment 40. During the time an object is travelling in the first segment 40, the object only reflects the first microwave signal 6. The second, third and/or fourth microwave signals 8, 66, 68 are not reflected by the object. Moreover, the reflected first microwave signal is only received by the first reception antenna 25, i.e. the reflected first microwave signal is not received by the second, third and/or fourth reception antennas 26, 27, 28.

The first, third and fourth microwave signals are not transmitted in to the second segment 42. During the time an object is travelling in the second segment 42, the object only reflects the second microwave signal 8. The first, third and/or fourth microwave signals 6, 66, 68 are not reflected by the object. Moreover, the reflected second microwave signal is only received by the second reception antenna 26, i.e. the reflected second microwave signal is not received by the first, third and/or fourth reception antennas 25, 27, 28.

The first, second and fourth microwave signals are not transmitted in to the third segment 44. During the time an object is travelling in the third segment 44, the object only reflects the third microwave signal 66. The first, second and/or fourth microwave signals 6, 8, 68 are not reflected by the object. Moreover, the reflected third microwave signal is only received by the third reception antenna 27, i.e. the reflected third microwave signal is not received by the first, second and/or fourth reception antennas 25, 26, 28.

The first, second and third microwave signals are not transmitted in to the fourth segment 46. During the time an object is travelling in the fourth segment 46, the object only reflects the fourth microwave signal 68. The first, second and/or third microwave signals 6, 8, 66 are not reflected by the object. Moreover, the reflected fourth microwave signal is only received by the fourth reception antenna 28, i.e. the reflected fourth microwave signal is not received by the first, second and/or third reception antennas 25, 26, 27.

Figure 5 is a process flow chart showing certain steps of an embodiment of a bullet detection process.

At step s2, the first, second, third, and fourth microwave signals 6, 8, 66, 68 are transmitted by the first, second, third, and fourth transmission antennas 21, 22, 23, 24 respectively and directed into the first, second, third, and fourth segments 40, 42, 44, 46 of the airspace volume 38 respectively. A continuous waveform (CW) is used. This allows the arrangement to accommodate the high speed of the bullet and hence the relatively short range window.

At step s4, microwave signals reflected from an object, i.e. the bullet 10 in this example, are received by one or more of the reception antennas 25, 26, 27, 28 of the radar antenna array 4. In this example, each of the first, second, third or fourth microwave signals are only reflected by the bullet 10 if the bullet 10 travels through the segment into which the respective microwave signal is transmitted. Thus, which of the radar antenna or antennas receive a reflected microwave signal depend on the bullet path 12.

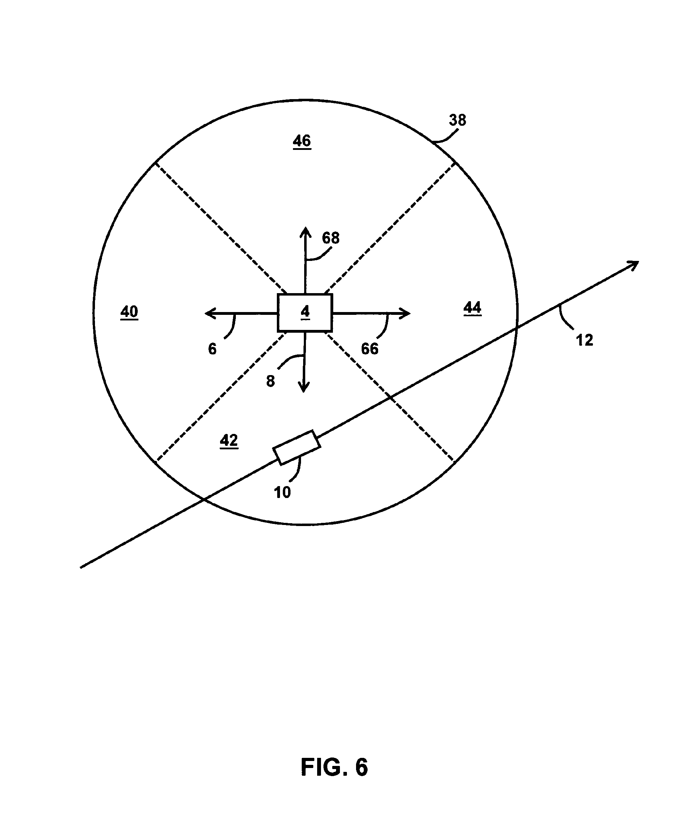

Figure 6 is a schematic illustration of a two-dimensional top-down view of the airspace volume 38 surrounding the radar antenna array 4, as described above with reference to Figure 4. In addition to the entities described in Figure 4, Figure 5 shows the bullet 10 and the bullet path 12. Steps s6 and s8 of the process of Figure 5 described above will be described after the discussion of Figure 6.

As shown in Figure 6, in this example the bullet path 12 intersects the second segment 42 and the third segment 44. In other words, in this example the bullet 10 travels through the second segment 42 and then the third segment 44.

During the time the bullet 10 travels through the second segment 42, the second microwave signal 8, which is transmitted from the second transmission antenna 22 of the radar antenna array 4, is reflected by the bullet 10. A portion of the reflected second microwave signal is directed back to the radar antenna array 4. This portion of the reflected second microwave signal is received by the second reception antenna 26 and forwarded to the receiver 302.

During the time the bullet 10 travels through the third segment 44, the third microwave signal 66, which is transmitted from the third transmission antenna 23 of the radar antenna array 4, is reflected by the bullet 10. A portion of the reflected third microwave signal is directed back to the radar antenna array 4. This portion of the reflected third microwave signal is received by the third reception antenna 28 and forwarded to the receiver 302. In this example, the portion of the reflected third microwave signal is received by the third reception antenna 28 after the second reception antenna 26 receives its respective signal. This is because the bullet 10 travels through the third segment 44 after it travel through the second segment. Thus, the third microwave signal 66 is reflected from the bullet 10 after the second microwave signal 8 is reflected from the bullet 10.

In this example the bullet 10 does not travel through the first segment 40 or the fourth segment 46. Thus, the first microwave signal 6 and the fourth microwave signal 68 are not reflected by the bullet 10. Thus, the first reception antenna 25 and the fourth reception antenna 28 do not receive microwave signals reflected by the bullet.

At step s6, the reflected microwave signals received by the second reception antenna 26 and the third reception antenna 27, and forwarded to the receiver 302, are processed to determine an indication of the bullet path 12.

In this embodiment the processor 3 compares the frequency of the microwave signal sent by the transmission antennas of the radar antenna array 4 to that reflected from the bullet 10 and received by the radar antenna array 4, allowing for the direct and highly accurate measurement of target velocity component in the direction of the beam. In this way, the processor 3 uses the Doppler Effect of the returned microwave signals from the bullet to determine its radial velocity.

In this embodiment, the processor 3 operates to reduce the effects of clutter. In this example, clutter refers to unwanted radar echoes, for example from ground, sea, rain, animals/insects, chaff and/or atmospheric turbulences.

For a helicopter, ground clutter is likely to be one of the limiting factors and will produce one of the largest unwanted signals that the processor 3 has to handle. Clutter backscatter power, $P_c$, includes surface returns at all ranges. The precise calculation requires integration over azimuth all ranges from the platform height to the clutter horizon:

$$P_c = \frac{P_t G_t G_r \lambda^2}{(4\pi)^3 L} \int_{-\pi}^{\pi} \int_{H}^{R_H} \frac{\sigma_0(\phi(R))\sec(\phi(R))}{R^3} f_r^4(\phi(R) - \phi_0, \theta) \, dR \, d\theta$$

where:

$\phi(R) = \sin^{-1}\dfrac{H}{R}$ is the elevation angle to the ground at range R from the radar;

$P_t$ is the transmit power (W);

$G_t$, $G_r$ are the transmit and receive gain respectively;

A is the radar wavelength (m);

L includes all radar losses;

$\sigma_0$ is the clutter reflectivity;

H is the radar height (m);

R is range (m);

$R_H$ is the range to the clutter horizon;

$\phi_0$ is the elevation boresight (radians); and

$f_r(\phi, \theta)$ is the one way antenna voltage pattern at elevation angle $\phi$ and azimuth angle $\theta$.

A complication of the above equation is that it neglects the fact that the clutter return at different points on the surface have different Doppler. In order to fully determine clutter power, points on the surface which contribute to each Doppler bin are defined and the integrand is integrated over this area.

Clutter reflectivity (normalised radar cross-section) is highly dependent on grazing angle as well as clutter type and surface roughness. A representative clutter model is given by:

$$\sigma_0 = \gamma \sin(\theta) + \alpha \exp\left(-\frac{\left(\frac{\pi}{2} - \theta\right)^2}{v^2}\right)$$

where:

  $\alpha, \gamma$ are constants dependent on clutter type;

  $\theta$ is the grazing angle (radians); and

  $v$ is a surface roughness parameter (radians)

In this example, if the helicopter 100 descends the clutter level will increase, for example, the helicopter 100 descending from 100m altitude to 10m results in a clutter increase of approximately 40dB. The clutter to noise ratio becomes almost 40dB. An allowance for additional "head room" at the ADC to prevent limiting is used as clutter modes are just theoretical models, and the reality can be significantly different. The ADC in a receiver can be considered like any other RF black box and has a noise figure. Its gain can be considered to be one. To ensure that the noise floor of the ADC does not significantly degrade the signal to noise ratio of the input signal it is necessary to ensure that the receiver noise floor is above the ADC's noise floor. Setting the receiver noise 10dB above the ADC noise results in a 0.4dB conversion loss to the ADC (degrades the signal to noise by 0.4dB).

Taking into account the placing of the receiver noise above the ADC's noise floor (10dB), the higher level of clutter when closer to the ground (~40dB) and 10dB additional headroom, the ADC's dynamic range is -60dB. Thus at least a 12 bit ADC is desirable, though 14 bits are preferable.

Radar performance is statistically-based with both probability of detection and probability of false alarm required to define performance. For a probability of false alarm of $10^{-6}$ and a 90% probability of detection the required signal to noise ratio (SNR) is approximately 13dB for Swerling 1 targets. At an altitude of 10 metres the processed SNR is estimated as 17.3dB which then meets the above requirements. An improvement in SNR can be achieved by increasing the transmitter power. For instance increasing the transmitter power from 0dBm (1mW) to 10dBm would increase the processed SNR by 10dB. This also increases the bullet detection range. For a 13dB SNR the detection range for 10mW of the transmitter power is approximately 21 meters for a BMG round. By increasing the transmit power the detection range increases, however, there are limitations imposed on the dynamic range by direct signal break through as the transmitter is always on, and limits to the ADC dynamic range.

At low altitudes (10m) the clutter is estimated to be some 10dB above the noise floor. The signal level for a bullet at the same range is estimated to be 13dB below the noise floor. A processing gain of =29dB is expected giving an SNR of ≈16dB. The clutter power is distributed over several Doppler bins. However assuming that the DC clutter dominates the clutter power then the clutter level in the DC bin would be 69dB above the noise floor. To facilitate that the detection process is performed against noise, rather than clutter, the side lobe response of the Doppler filters preferably suppress the stationary clutter level to below the noise floor in the Doppler bin where the bullet is being detected. For this example, 80dB of sidelobe suppression the clutter provides for the clutter to be 10dB below the noise. The applied Doppler weighting could provide a uniform sidelobe level. However, a Doppler weighting which falls off further as one moves away from the Doppler bin centre frequency is preferable due to the frequency separation of the high velocity bullets and the lower velocity clutter.

In this example, the processor 3 processes the received signals using the following algorithm.

For each respective microwave signal forwarded to the receiver 302 from the respective reception antennas of the radar antenna array 4, the processor 3 reads out a clock value from the clock 300. In this example, the processor 3 reads out a first clock value for the forwarded microwave signal received by the receiver 302 from the second reception antenna 26. In this example, the processor 3 reads out a second clock value for the forwarded microwave signal received by the receiver 302 from the third reception antenna 27. In this example, the second clock value is later than the first clock value because the forwarded microwave signal from the third reception antenna 27 is received at the receiver 302 after the forwarded microwave signal from the second reception antenna.

The processor 3 compares the respective clock values of the respective forwarded microwave signals to determine the segment the detected object first travelled through. In this embodiment, the segment the detected object first travelled through is the segment observed by the reception antenna that forwarded the microwave signal with the earliest clock value.

If forwarded microwave signals are received at the receiver 302 from more than one reception antenna 25, 26, 27, 28, then the processor 3 compares the respective clock values of the respective forwarded microwave signals to determine the order in which the detected object travels through the segments. In this embodiment, the order of the segments the detected object travelled through is the segment corresponding to the microwave signal with the earliest clock value, followed by the segment corresponding to the microwave signal with the next earliest clock value and so on.

In this example, the processor 3 compares the first and second clock values. The processor 3 determines that the first clock value is earlier than the second clock value. Thus, the processor determines that the bullet 10 travelled through the segment corresponding to the microwave signal assigned the first clock value first, followed by the segment corresponding to the microwave signal assigned the second clock value. Thus, the processor 3 determines that an object, in this case the bullet 10, travelled through the second segment 42 followed by the third segment 44.

The processor generates an indication of the direction of a detected object. In this embodiment, the indication has the following form. The indication of the direction of the bullet lists the segments through which the bullet travelled, in the order in which the bullet travelled through them, for example:

"SEGMENT ?, SEGMENT ?, ..."

Thus, in this example the processor 3 generates the indication "2, 3" indicating that the bullet 10 travelled through the second segment 42 first, and travelled through third segment 44 afterwards.

At step s8, the indication of the direction of the bullet 10 is displayed. The displayed indication of direction may be used, for example, to determine whether it is necessary to perform evasive manoeuvres, or to identify an enemy position.

Thus, the above described process advantageously provides a bullet detection process that tends to provide an indication of the direction of incoming fire, for example, from an enemy combatant.

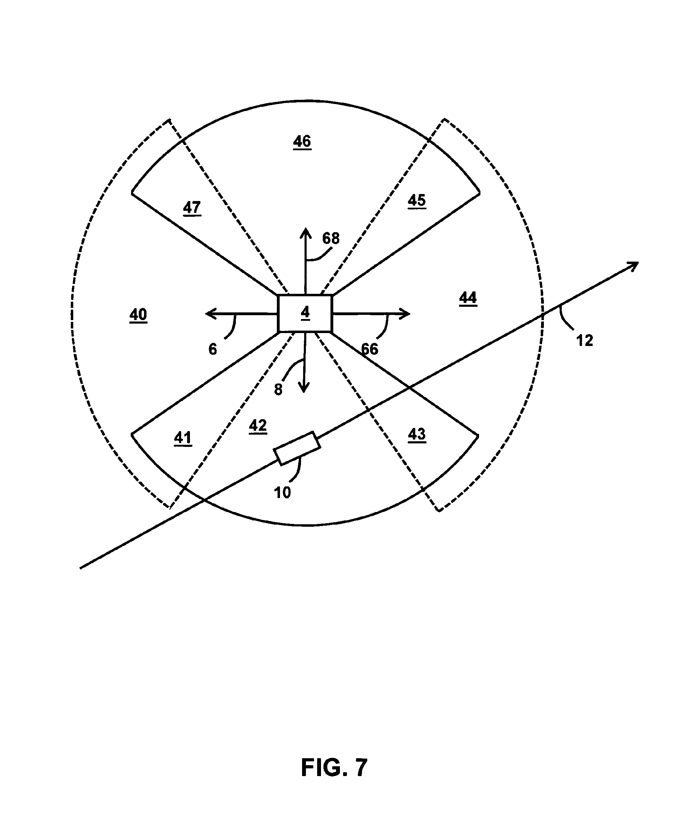

In the above embodiment, the components of the radar antenna array 4 are arranged and operated so that the respective first, second, third, and fourth microwave signals, that are directed in to the respective first, second, third, and fourth regions of airspace, do not overlap. Thus, the first, second, third and fourth segments do not overlap. A further embodiment, in which the components of the radar antenna array 4 are arranged and operated so that certain microwave signals do overlap, i.e. certain segments overlap, will now be described with reference to Figure 7.

Figure 7 is a schematic illustration of a two-dimensional top-down view of the airspace volume 38 surrounding the radar antenna array 4. The same entities as those described above with reference to Figure 6 are shown in Figure 7 using the same reference numerals. As shown in Figure 7, in this embodiment the first segment 40 overlaps the second segment 42 and the fourth segment 46. In addition, the second segment 42 overlaps the third segment 44. In addition, the third segment 44 overlaps the fourth segment 46. The overlap between the first segment 40 and the second segment 42 is hereinafter referred to as the "first overlap 41". The overlap between the second segment 44 and the third segment 44 is hereinafter referred to as the "second overlap 43". The overlap between the third segment 44 and the fourth segment 46 is hereinafter referred to as the "third overlap 45". The overlap between the fourth segment 46 and the first segment 40 is hereinafter referred to as the "fourth overlap 47".

As described above for the previous embodiment, in this embodiment the respective first, second, third, and/or fourth microwave signals are reflected by an object if the object travels through the respective first, second, third, and/or fourth regions of airspace. Also, the respective reflected first, second, third, and/or fourth microwave signals are received by the respective first, second, third, and fourth reception antennas, as described above in the previous embodiment.

The above described overlapping of certain segments provides the following. An object travelling through the first overlap 41 reflects both the first microwave signal 6 and the second microwave signal 8. The reflected first and second microwave signals are received by the first and second reception antennas respectively. An object travelling through the second overlap 43 reflects both the second microwave signal 8 and the third microwave signal 66. The reflected second and third microwave signals are received by the second and third reception antennas respectively. An object travelling through the third overlap 45 reflects both the third microwave signal 66 and the fourth microwave signal 68. The reflected third and fourth microwave signals are received by the third and fourth reception antennas respectively. An object travelling through the fourth overlap 47 reflects both the first microwave signal 6 and the fourth microwave signal 68. The reflected first and fourth microwave signals are received by the first and fourth reception antenna respectively.

Performing a bullet detection process on the bullet 10 in this embodiment, i.e. the bullet 10 shown in Figure 7, will now be described. In this embodiment, the bullet detection process is carried out by performing the same steps as in the bullet detection process of the previous embodiment described above with reference to Figure 5, except for certain differences as mentioned below.

At step s2, the first, second, third, and fourth microwave signals 6, 8, 66, 68 are directed into the first, second, third, and fourth segments 40, 42, 44, 46, as in the previous embodiment. However, in this embodiment, certain segments overlap, as described above.

At step s4, during the time the bullet 10 travels through the part of the second segment 42 that does not include the second overlap 43, the second microwave signal 8 is reflected by the bullet 10. A portion of the reflected second microwave signal is directed back to the radar antenna array 4. This portion of the reflected second microwave signal is received by the second reception antenna 26 and forwarded to the receiver 302.

During the time the bullet 10 travels through the second overlap 43, the second microwave signal 8 and the third microwave signal 66 are reflected by the bullet 10. A portion of the reflected second microwave signal is received by the second reception antenna 26 and forwarded to the receiver 302. Concurrently, a portion of the reflected third microwave signal is received by the third reception antenna 27 and forwarded to the receiver 302. The microwave signals received from the bullet 10 as it travels through the second overlap 43, are received at the receiver 302 after the microwave signals received from the bullet 10 as it passes through only the second segment 42 (i.e. the part of the second segment 42 that does not include the first overlap 41 or the second overlap 43). This is because, in this example, the bullet travels through the second overlap 43 after it travels through the part of the second segment 42 that does not include the first overlap 41 or the second overlap 43.

During the time the bullet 10 travels through the part of the third segment 44 that does not include the second overlap 43, the third microwave signal 66 is reflected by the bullet 10. A portion of the reflected third microwave signal is directed back to the radar antenna array 4. This portion of the reflected third microwave signal is received by the third reception antenna 28 and forwarded to the receiver 302. The microwave signals received from the bullet 10 as it travels through the third segment 44 only (i.e. the part of the third segment 44 that does not include the second overlap 43 or the third overlap 45) are received at the receiver 302 after the microwave signals received from the bullet 10 as it passes through the second overlap 43. This is because, in this example, the bullet 10 travels through the second overlap 43 after it travels through the part of the third segment 44 that does not include the second overlap 43 or the third overlap 45.

At step s6, the received reflected microwave signals are processed by the processor 3, to determine an indication of the bullet path 12, using the following algorithm, which is analogous to the algorithm used in the previous embodiment.

The processor 3 reads out clock values from the clock 300 for the received microwave signals. In this example, the processor 3 reads out clock values for the forwarded microwave signal received by the receiver 302 from the second reception antenna 26. Also, the processor 3 reads out a second clock value for the forwarded microwave signal received by the receiver 302 from the third reception antenna 27. In this example, some of the later clock values read for the microwave signal received at the second reception antenna 26 are the same as some of the earlier clock values read for the microwave signal received at the third reception antenna 27. This is because microwave signals were received at the same time by both the second and third reception antennas 26, 27 (i.e. when the bullet 10 travelled through the second overlap 43).

The processor 3 compares the respective clock values of the respective forwarded microwave signals to determine order of the segments the bullet travelled through. The earlier the clock value of a microwave signal is, the earlier the bullet 10 travelled through the segment corresponding to that microwave signal. If, for a duration of time, two microwave signals have the same clock value, then the bullet 10 travelled through the overlap of the segments corresponding to the two microwave signals, for that duration of time.

In this example, the processor 3 compares the read clock values. The processor 3 determines earliest clock values correspond to the microwave signal received at the second reception antenna, and that the latest clock values correspond to the microwave signal received at the third reception antenna, and that these clock values overlap, i.e. that microwave signals were received at the second and third reception antennas simultaneously. Thus, the processor determines that the bullet 10 travelled through the non-overlapping part of the second segment 42, followed by the second overlap 43, followed by the non-overlapping part of the third segment 44.

The processor generates an indication of the direction of a detected object, in the same way as the previous embodiment. Thus, in this example the processor 3 generates the indication "2, 2/3, 3" indicating that the bullet 10 travelled through the non-overlapping part of second segment 42 first, followed by the overlap between the second and third segments (the second overlap 43), followed by the non-overlapping part of the third segment 44.

At step s8, the indication of the direction of the bullet 10 is displayed. The displayed indication of direction may be used, for example, to determine whether it is necessary to perform evasive manoeuvres, or to identify an enemy position.

Thus, in addition to above mentioned advantages, the present embodiment of a bullet detection system tends to provide a more accurate indication of bullet path and/or the direction of incoming bullets. This is achieved by overlapping the detection regions of the antenna in the radar antenna array 4.

In the above embodiments, the bullet detection system 1 is attached to a helicopter. However, in other embodiments the bullet detection system may be attached to a different type of aircraft, or to any other appropriate type of vehicle, for example a tank. Also possible is use with any appropriate form of autonomous or unmanned vehicle, for example an unmanned air vehicle.

In the above embodiments, the components of the bullet detection system are attached externally to the helicopter. However, in other embodiments the components are distributed in a different manner. For example, in other embodiments one or more of the components of the bullet detection system are inside the helicopter. One particularly advantageous arrangement is for the controller 2 to be carried inside the helicopter and the radar antenna array to be attached to the outside of the helicopter.

In the above embodiments, the bullet detection system is used to detect and determine the direction of a single bullet. However, in other embodiment the bullet detection system is used to detect and determine the direction of any number of bullets travelling in any directions at the same or different times. This may include detection of machine gun fire.

In the above embodiments, the bullet detection system is used to detect and determine the direction of bullets. However, in other embodiments other objects are detected and/or their direction determined.

In the above embodiments, a single radar antenna array is used. However, in other embodiments other numbers of radar antenna arrays are used.

In the above embodiments, the components of the bullet detection system are configured as explained above with reference to Figures 2. However, in other embodiments the components of the bullet detection system are configured in a different way so as to provide the same or corresponding functionality. Also, in other embodiments different components are used and configured in the same or different ways to those described above, so as to provide the same or corresponding functionality.

In the above embodiments, four microwave signals are transmitted from, and/or received at, the radar antenna array. However, in other embodiments any number of microwave signals is transmitted from, and/or received at, the radar antenna array.

In the above embodiments, microwave signals are directed into four distinct regions of airspace, i.e. the first, second, third, and fourth segments. However, in other embodiments, microwave signals are directed into any number of distinct regions of airspace, i.e. there are any number of segments.

In the above embodiments, the radar antenna array comprises a first beam-shaping dish and a second beam-shaping dish. The beam-shaping dishes have the shape and dimensions described above with reference to Figure 3. However, in other embodiments the radar antenna array comprises any number of beam-shaping dishes. In other embodiments, the beam-shaping dishes have different appropriate shape and/or dimensions. In other embodiments, the radar antenna array comprises any number of different components that provide the same functionality.

In the above embodiments, the radar antenna array comprises a first transmission antenna, a second transmission antenna, a third transmission antenna, a fourth transmission antenna, However, in other embodiments the radar antenna array comprises any number of transmission antennas. In other embodiments, the radar antenna array comprises any number of different components that provide the same functionality.

In the above embodiments, the radar antenna array comprises a first beam-blocking plate and a second beam-blocking plate. The beam-blocking plates have the shape and dimensions described above with reference to Figure 3. However, in other embodiments the radar antenna array comprises any number of beam-blocking plates. In other embodiments, the beam-blocking plates have different appropriate shape and/or dimensions. In other embodiments, the radar antenna array comprises any number of different components that provide the same functionality.

In the above embodiments, the radar antenna array comprises a first reception antenna, a second reception antenna, a third reception antenna, an fourth reception antenna, and. However, in other embodiments the radar antenna array comprises any number of reception antennas. In other embodiments, the radar antenna array comprises any number of different components that provide the same functionality.

In the above embodiments, the region of airspace in which the bullet can be detected is a hemisphere. However, in other embodiments the region of airspace is a different shape.

In the above embodiments, the region of airspace is divided into four segments, as described above with reference to Figure 4. However, in other embodiments the region of airspace is divided into four segments in a different manner. For example, in other embodiments a single microwave signal is directed into four different segments by using blocking plates to divide the signal into four signals.

In the above embodiments, the segments that the region of airspace is divided in to, i.e. the segments into which (and from which) the microwave signals are directed (and received), are either not overlapping as described above with reference to Figure 6, or partially over-lapping as described above with reference to Figure 7. However, in other embodiments the segments overlap to a different extent and/or in a different way.

In the above embodiment, the size of a segment of the region of airspace into which a transmission antenna directs a microwave signal is the same as the size of a segment of the region of airspace from which a reception antenna receives a reflected microwave signal. However, in other embodiments the size of one or more segments of the region of airspace into which a transmission antenna directs a microwave signal is different to the size of one or more segments of the region of airspace from which a reception antenna receives a reflected microwave signal. In other embodiments, one or more segments of the region of airspace from which a reception antenna receives a reflected microwave signal overlap, whilst the segments into which transmission antennas direct a microwave signal do not overlap, and vice versa. For example, in other embodiments the segments into which transmission antennas direct a microwave signal do not overlap as described above with reference to Figure 6 and the segments of the region of airspace from which a reception antenna receives a reflected microwave signal overlap.

In the above embodiments, clock values are used to determine the order in which the reflected microwave signals are received. Use of the clock values in this way represents a relatively simple form of processing for providing a determination of the time-order of the received microwave signals. However, in other embodiments more complex forms of processing using the clock information may be used to determine timing information of the received microwave signals, or any other appropriate information, for example the Doppler profile of the bullet.

In the above embodiments, the processor uses the algorithm, as described above with reference to Figure 5, to determine the direction of the bullet. However, in other embodiments different algorithms may be used.

In the above embodiments, the processor generates an indication of the direction of the bullet, as described above with reference to Figure 5. However, in other embodiments the direction of the bullet is indicated in a different way

In the above embodiments, the generated indication of the direction of the bullet is displayed. However, in other embodiments the indication is not displayed. In other embodiments a different action is performed. For example, in other embodiments, automatic evasive manoeuvres are performed by the vehicle, for example, as instructed by a computer.

In the above embodiments, the processor uses the Doppler effect of the returned microwave signals from the bullet to determine the radial velocity of the bullet. In other embodiments, the processor uses a calculated radial velocity in addition to or instead of the Doppler Effect to determine the bullet trajectory and/or a classification for the bullet, such as bullet type.

In the above embodiments, a continuous waveform (CW) is used for the microwave signals. This advantageously provides that the receivers do not need to be switched off during transmission, i.e. there is no requirement for a duplexer to be used. Moreover, the use of CW tends to advantageously simplify the hardware design. However, in other embodiments a different transmit waveform, or a combination of the same and different transmit waveforms may be used. For example, a pulsed waveform could be used. This would enable the range to the target to be directly measured, for example by inferring range from the target's velocity profile. Also, frequency modulated continuous waveforms (FMCW) can be used.

In the above embodiments, the bullet detection system uses four pairs of antennas formed in a single radar antenna array. However, in other embodiments the bullet detection system uses any number of separate antennas, i.e. antennas not formed in an array, to provide the same functionality. In other embodiments, a combination of any number of separate antennas, and any number of antennas formed in any number of arrays are used.

**Claims**

1.    A projectile detection system for use on a vehicle (100), the projectile detection system comprising:

   a radar antenna array (4) arranged to transmit and receive microwave signals so as to provide a plurality of detection segments (40, 42, 44, 46) of a volume of airspace (38);
   one or more processors (3) arranged to:

      determine which segments (40, 42, 44, 46) of the plurality of segments received microwave signals reflected by a projectile (10) are received from;
      determine timing information relating to a time order in which the received microwave signals are received; and
      determine directional information relating to a direction of travel of the projectile (10) using the determined segments (40, 42, 44, 46) in which the received microwave signals reflected by the projectile (10) are received from and the determined timing information; wherein
      the microwave signals have a frequency between 1 GHz and 30GHz.

2.    A projectile detection system according to claim 1, wherein the microwave signals have a frequency between 7GHz and 17GHz.

3.    A projectile detection system according to claim 1, wherein the microwave signals have a frequency between 10GHz and 14GHz.

4. A projectile detection system according to any of claims 1 to 3, wherein the radar antenna array (4) comprises:

a plurality of transmitters (21, 22, 23, 24), each transmitter (21, 22, 23, 24) in the plurality being arranged to transmit microwave signals into a respective segment (40, 42, 44, 46) of the plurality of segments;
a plurality of receivers (25, 26, 27, 28), each receiver (25, 26, 27, 28) in the plurality being arranged to receive microwave signals reflected by the projectile (10) from a respective segment (40, 42, 44, 46) of the plurality of segments; and
shielding means (500) arranged to prevent microwave signals transmitted from a transmitter (21, 22, 23, 24) being directly received by a receiver (25, 26, 27, 28) without first being reflected by an object.

5. A projectile detection system according to any of claims 1 to 5, wherein the microwave signals have a continuous waveform.

6. A projectile detection system according to any of claims 1 to 5, wherein the volume of airspace (30) is a volume of airspace substantially surrounding a portion of the vehicle (100).

7. A projectile detection system according to any of claims 1 to 6, wherein at least two of the segments (40, 42, 44, 46) overlap to some extent.

8. A projectile detection system according to any of claims 1 to 7, further comprising means for determining a radial velocity of the projectile (10).

9. A projectile detection system according to claim 8, wherein the means for determining a radial velocity of the projectile (10) is adapted to determine a radial velocity of the projectile using a Doppler profile of the received microwave signals.

10. A vehicle comprising a projectile detection system according to any of claims 1 to 9.

11. A vehicle comprising according to claim 10, wherein the vehicle (100) is an aircraft.

12. A method of detecting a projectile (10) comprising:

transmitting microwave signals so as to provide a plurality of detection segments (40, 42, 44, 46) of a volume of airspace (38);
receiving microwave signals reflected by the projectile (10);
determining which segments (40, 42, 44, 46) of the plurality of segments received microwave signals reflected by the projectile (10) are received from;
determining timing information relating to a time order in which the received microwave signals are received; and
determining directional information relating to a direction of travel of the projectile (10) using the determined segments in which the received microwave signals reflected by the projectile (10) are received from and the determined timing information; wherein
the microwave signals each have a frequency between 1 GHz and 30GHz.

13. A method according to claim 12, wherein the microwave signals each have a frequency between 7GHz and 17GHz.

14. A method according to claim 12, wherein the microwave signals each have a frequency between 10GHz and 14GHz.

15. A method according to any of claims 12 to 14, wherein the projectile (10) is a bullet.

**FIG. 1**

**FIG. 2**

**FIG. 3**

**FIG. 4**

```
                    ┌──────────┐
                    │  START   │
                    └────┬─────┘
                         │
                         ▼                                    ╭ s2
┌──────────────────────────────────────────────────────────┐
│       TRANSMIT MICROWAVE SIGNALS INTO SEGMENTS OF          │
│                    AIRSPACE VOLUME                          │
└──────────────────────────┬─────────────────────────────────┘
                           │
                           ▼                                  ╭ s4
┌──────────────────────────────────────────────────────────┐
│     RECEIVE MICROWAVE SIGNAL(S) REFLECTED FROM THE         │
│    BULLET TRAVELLING THROUGH ONE OR MORE SEGMENTS          │
└──────────────────────────┬─────────────────────────────────┘
                           │
                           ▼                                  ╭ s6
┌──────────────────────────────────────────────────────────┐
│ PROCESS RECEIVED MICROWAVE SIGNAL(S) TO DETERMINE          │
│            AN INDICATION OF BULLET PATH                     │
└──────────────────────────┬─────────────────────────────────┘
                           │
                           ▼                                  ╭ s8
┌──────────────────────────────────────────────────────────┐
│             DISPLAY DETERMINED INDICATION                  │
└──────────────────────────┬─────────────────────────────────┘
                           │
                           ▼
                    ┌──────────┐
                    │   END    │
                    └──────────┘
```

## FIG. 5

**FIG. 6**

**FIG. 7**

Europäisches
Patentamt

European
Patent Office

Office européen
des brevets

## EUROPEAN SEARCH REPORT

Application Number

EP 10 25 0713

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/091490 A1 (TU PO-JEN [TW] ET AL) 9 April 2009 (2009-04-09) * figure 1 * * abstract * ----- | 1-15 | INV. G01S7/35 G01S13/58 G01S13/66 |
| Y | EP 1 666 915 A1 (MITSUBISHI ELECTRIC CORP [JP]) 7 June 2006 (2006-06-07) * figures 2,3 * * abstract * * paragraphs [0005], [0029], [0030] * ----- | 1-15 | |
| A | US 6 771 205 B1 (BARTON DAVID K [US] ET AL) 3 August 2004 (2004-08-03) * figures 1,1A * * abstract * ----- | 1,12 | |
| A | JP 2009 128016 A (FUJITSU TEN LTD) 11 June 2009 (2009-06-11) * abstract * ----- | 1,12 | |

| | |
|---|---|
| | TECHNICAL FIELDS SEARCHED (IPC) |
| | G01S |

The present search report has been drawn up for all claims

| Place of search | Date of completion of the search | Examiner |
|---|---|---|
| The Hague | 4 May 2011 | Alberga, Vito |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 25 0713

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2011

| Patent document cited in search report | | Publication date | Patent family member(s) | Publication date |
|---|---|---|---|---|
| US 2009091490 | A1 | 09-04-2009 | NONE | |
| EP 1666915 | A1 | 07-06-2006 | NONE | |
| US 6771205 | B1 | 03-08-2004 | NONE | |
| JP 2009128016 | A | 11-06-2009 | NONE | |

EPO FORM P0459

For more details about this annex : see Official Journal of the European Patent Office, No. 12/82